# EUROPÄISCHE PATENTSCHRIFT

(11) **EP 0 983 905 B1**
(45) Veröffentlichungstag und Bekanntmachung des Hinweises auf die Patenterteilung: **17.12.2003**
(21) Anmeldenummer: 99109570.4
(22) Anmeldetag: 14.05.1999
(51) Int. Cl.: B60R 16/02

(54) **Schaltungsanordnung zur Abkopplung einer elektronischen Einrichtung von einer Datenleitung in einem Kraftfahrzeug**
Circuit for disconnecting an electronic device from a data transmission line in a motor vehicle
Circuit permettant de déconnecter un appareil électronique d'une ligne de données dans un véhicule à moteur

(30) Priorität: 24.07.1998 DE 19833462
(43) Veröffentlichungstag der Anmeldung: 08.03.2000
(73) Patentinhaber: Siemens Aktiengesellschaft, 80333 München (DE)
(72) Erfinder: Blümel, Thomas, 61389 Schmitten (DE); Schneider, Erwin, 65835 Liederbach (DE); Jürges, Klaus-Dieter, 65812 Bad Soden (DE)

(56) Entgegenhaltungen:
- WO-A-98/30961
- WO-A-98/35857
- DE-A- 4 340 048
- DE-A- 19 611 942

## Beschreibung

Die Erfindung betrifft eine Schaltungsanordnung zur Abkopplung einer elektronischen Einrichtung von einer Datenleitung in einem Kraftfahrzeug gemäß dem Oberbegriff des Patentanspruchs 1.

In einem Kraftfahrzeug werden verschiedene vorhandene Steuergeräte oder elektronische Komponenten wie z. B. Gierratensensoren über den CAN-Bus (CAN = Controller Area Network) miteinander verbunden und tauschen über diesen Daten aus. Üblicherweise sind die Steuergeräte und elektronischen Komponenten als auch das Bussystem im Kraftfahrzeug so platziert, dass diese auch bei verhältnismäßig schwerwiegenden Unfällen bei einer Deformation der Fahrzeugkarosserie mit einer großen Wahrscheinlichkeit funktionsfähig bleiben. Bei leichteren Unfällen sind die elektronischen Systeme durch die Karosserie des Fahrzeuges gut geschützt.

Im Kraftfahrzeug finden aber zunehmend elektronische Einrichtungen zur Abstandsmessung bzw. zur Abstandsregelung des Fahrzeuges zu einem vorausfahrenden Fahrzeug bzw. zu einem Hindernis Einzug. Solche Systeme müssen an oder in der Nähe der "Außenhaut" des Kraftfahrzeuges montiert werden, da sie über Sensorsysteme die Umgebung des Kraftfahrzeuges scannen. Um eine Kommunikation dieser Abstandsregel- bzw. Abstandsmesssysteme mit den übrigen vorhandenen Steuergeräten und elektronischen Komponenten des Kraftfahrzeuges zu ermöglichen, werden diese an den CAN-Bus des Kraftfahrzeuges angeschlossen. Auf Grund des Einbauortes im Kraftfahrzeug können diese schon bei relativ leichten Unfällen zerstört werden, da der Schutz durch die Fahrzeugkarosserie fehlt.

Durch einen solchen Auffahrunfall wird aber nicht nur das elektronische Gerät, sondern auch der an das elektronische Gerät angeschlossene CAN-Bus in Mitleidenschaft gezogen, z. B. durch den Kurzschluss der beiden CAN-Leitungen, durch den Kurzschluss der CAN-Leitung gegen die Versorgungsspannung oder die Masse des Fahrzeuges. Als Folge davon wird der CAN-Bus stark gestört, wobei eine Kommunikation der daran angeschlossenen Steuergeräte und elektronischen Komponenten nicht mehr möglich ist und das System gemäß des CAN-Bus-Protokolls in den Busoff-Zustand geht. Da durch die Unterbrechung der Kommunikation über den CAN-Bus dem angeschlossenen Busteilnehmer die von ihm benötigten Daten nicht mehr zur Verfügung stehen, müssen diese mit Ersatzwerten arbeiten, wobei aber eine Funktionseinschränkung der betroffenen Geräte erfolgt (Notlaufbetrieb).

Aus der WO 98/30961 ist ein gattungsgemäßes elektronisches Bussystem bekannt, bei welchem ein bestimmter Abschnitt der Datenleitung abgekoppelt wird. Zu diesem Zweck ist je eine Schaltungsanordnung an jedem Ende des abkoppelbaren Abschnittes vorgesehen. Dies führt zu einem hohen Hardwareaufwand der gesamten Schaltungsanordnung.

Der Erfindung liegt somit die Aufgabe zugrunde, eine Schaltungsanordnung anzugeben, bei welcher trotz Ausfall eines an dem CAN-Bus angeschlossenen elektronischen Gerätes der Fahrzeugbetrieb ohne Einschränkungen und ohne zusätzlichen Hardwareaufwand voll aufrechterhalten werden kann.

Erfindungsgemäß wird die Aufgabe durch die Merkmale des Patentanspruchs 1 gelöst.

Der Vorteil der Erfindung besteht darin, dass trotz der Beschädigung der elektronischen Einrichtung durch einen Unfall eine ungestörte Kommunikation der weiteren an der Datenleitung angeschlossenen Steuergeräte und elektronischen Komponenten, die für die Fahrtüchtigkeit des Kraftfahrzeuges bestimmt sind, über die Datenleitung sichergestellt wird. Der Fahrer muss keine Einschränkungen in Bezug auf die Fahrtüchtigkeit des Fahrzeuges in Kauf nehmen.

Durch die galvanische Abkopplung der elektronischen Einrichtung von der Datenleitung wird auch sichergestellt, dass Einflüsse auf die Datenleitung, die im nicht unmittelbaren Bereich der durch den Unfall beschädigten Stelle des Kraftfahrzeuges lokalisiert sind, auf das gesamte Elektroniksystem des Kraftfahrzeuges unterbunden werden.

Durch die Unterbrechung der Datenleitungen wird eine zeitlich begrenzte galvanische Entkopplung des durch einen Unfall gestörten elektronischen Systems von der Datenleitung des Kraftfahrzeuges mittels nur einer einzigen Anordnung erreicht.

Vorteilhafterweise wird eine Verbindung zu einem Datenleitungsabschlußwiderstand hergestellt, wenn die Busarchitektur dies erfordert.

Bei einer besonders einfachen Ausgestaltung der Erfindung steuert die Fehlererkennungseinrichtung die Schalteinrichtung über ein Relais oder einen elektronischen Schalter an.

Eine direkte Erkennung einer Störung der an die Datenleitung angekoppelten elektronischen Einrichtung erfolgt über eine Signalleitung, welche die elektronische Einrichtung mit der Fehlererkennungseinrichtung verbindet.

Dabei wertet die Fehlererkennungseinrichtung ein von der elektronischen Einrichtung im Normalbetrieb ausgesandtes Signal aus.

Eine indirekte Überwachung der elektronischen Einrichtung ist möglich, wenn die Fehlererkennungseinrichtung über die Datenleitung mit der elektronischen Einrichtung verbunden ist und in Abhängigkeit der Bewertung des Zustandes der Datenleitung die Schalteinrichtung angesteuert wird. Die Fehlererkennung erfolgt hierbei durch eine an sich bekannte Busoff-Prüfung über die Bewertung des Bus-Zustandes.

Ist die Datenleitung als Zweidraht-Bussystem ausgebildet, ist in jeder Busleitung ein Schalter angeordnet, wobei die Schalter beider Busleitungen gleichzeitig über ein Doppelrelais von der Fehlererkennungseinrichtung gesteuert werden.

Eine baulich einfache Anordnung wird erreicht, wenn die Fehlererkennungseinrichtung Bestandteil des weiteren elektronischen Systems des Kraftfahrzeuges ist.

Vorteilhafterweise ist die elektronische Einrichtung als Steuergerät, insbesondere als Abstandsregeleinrichtung eines Kraftfahrzeuges ausgebildet. Eine solche Abstandsregeleinrichtung stellt ein Komfortsystem des Fahrzeuges dar. Durch die vorliegende Erfindung wird verhindert, daß das Fahrzeug bei der Beschädigung dieses Komfortsystems nur noch eingeschränkt fahrfähig ist.

In einer Ausgestaltung ist die elektronische Einrichtung als Sensoreinrichtung des Kraftfahrzeuges ausgebildet.

Die Erfindung läßt zahlreiche Ausführungsformen zu. Eine davon soll anhand der in der Zeichnung dargestellten Figuren näher erläutert werden. Es zeigen:
- Figur 1:: Anordnung der Abstandsregeleinrichtung an einem Kraftfahrzeug,
- Figur 2:: direkte Erkennung eines abzukoppelnden Busteilnehmers,
- Figur 3:: indirekte Erkennung des abzukoppelnden Busteilnehmers,
- Figur 4:: Kombination der Erkennung des abzukoppelnden Busteilnehmers nach Figur 2 und 3.

Gleiche Merkmale sind durch gleiche Bezugszeichen gekennzeichnet.

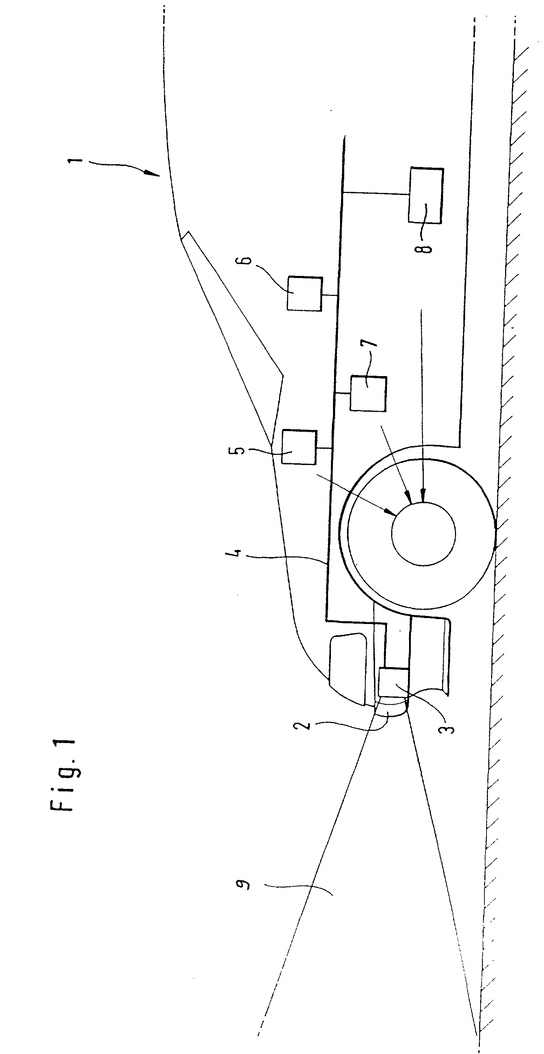

In Figur 1 ist am Stoßfänger 2 eines Kraftfahrzeuges 1 ein automatisches Geschwindigkeits- und Abstandsregelsystem 3 zur Einhaltung des Sicherheitsabstandes von Fahrzeugen angeordnet. Bei Annäherung des geregelten Fahrzeuges 1 an ein langsameres Fahrzeug wird automatisch die Geschwindigkeit beeinflußt und über diese der Abstand zum vorausfahrenden Fahrzeug 1 reguliert. Ist der Fahrkorridor wieder frei, beschleunigt das System das Fahrzeug 1 auf die zuvor eingestellte Wunschgeschwindigkeit. Über ein Bussystem 4 ist das automatische Geschwindigkeit- und Abstandsregelsystem 3 mit dem Steuergerät der Motorsteuerung 5, dem Steuergerät der Bremse 7 und dem Steuergerät des Getriebes 8 verbunden. Elektronische Befehle, welche über das Bussystem 4 ausgetauscht werden, regulieren die Geschwindigkeit zum vorausfahrenden Fahrzeug so lange, bis der gewünschte Abstand erreicht ist.

Über eine Anzeigeeinheit 6, die ebenfalls von dem Geschwindigkeits- und Abstandsregelsystem 3 über das Bussystem 4 angesteuert wird, wird die aktuelle Geschwindigkeit und auch der Abstand zum vorausfahrenden Fahrzeug angezeigt. Das vorausfahrende Fahrzeug wird dabei über den Sensorstrahl 9 erfaßt, welcher von einem nicht weiter dargestellten Radarsensor ausgesandt wird, der Bestandteil der Geschwindigkeits- und Abstandsregeleinrichtung 3 ist.

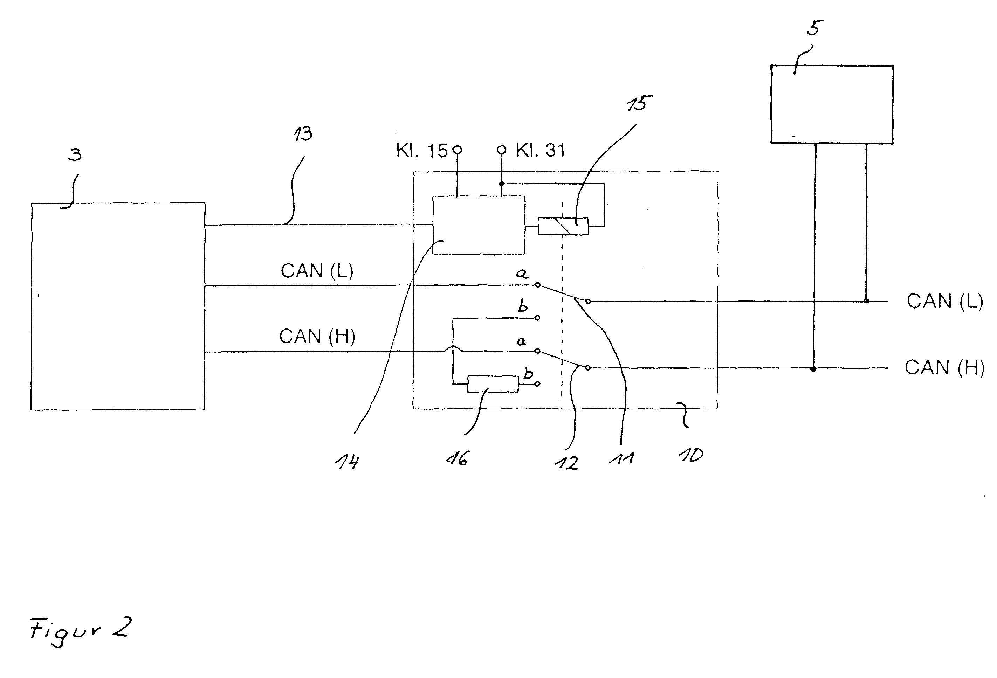

In Figur 2 ist das Prinzip der direkten Erkennung des Betriebszustandes des Abstands- und Regelsystems 3 dargestellt.

Der Einfachheit halber sind in dieser Figur nur das System 3 und das Motorsteuergerät 5 dargestellt, wobei das Motorsteuergerät 5 entweder die Benzineinspritzung oder die Drosselklappe des Fahrzeuges beeinflußt. Über ein Zweidraht-Bussystem, einen sogenannten CAN-Bus, sind das System 3 und das Steuergerät 5 miteinander verbunden. In jeder Busleitung CAN (L) bzw. CAN (H) ist ein Schalter 11 bzw. 12 angeordnet, der im geschlossenen Zustand eine Nachrichtenübermittlung zwischen dem Abstands- und Geschwindigkeitsregelsystem 3 und dem Steuergerät 5 ermöglicht.

Weiterhin ist zwischen dem System 3 und dem Steuergerät 5 ein CAN-Bus-Entkoppler 10 vorgesehen.

Der CAN-Bus-Entkoppler 10 weist eine Steuereinheit 14 auf, welche über eine Signalleitung 13 mit dem Geschwindigkeits- und Abstandsregelsystem 3 verbunden ist. Des weiteren wird die Steuereinheit 14 über Klemme 15 und Klemme 31 des Kraftfahrzeuges mit Energie versorgt. Mit Hilfe eines zwischen Klemme 31 und der Steuereinheit 14 angeordneten Relais 15 schaltet die Steuereinheit 14 die Schalter 11 und 12 in den Busleitungen CAN (L) und CAN (H).

Zur Erkennung der Betriebsfähigkeit des Geschwindigkeits- und Abstandsregelsystems 3 sendet dieses System 3 eine Rechteckimpulsfolge mit konstanter Frequenz auf der Signalleitung 13. Dieses Signal wird von der Steuereinheit 14 ausgewertet. Im Normalbetrieb wird die Steuereinheit 14 ein korrektes Signal auf der Signalleitung 13 erkennen. Dabei bleibt der CAN-Bus zischen den Steuergeräten 3 und 5 durchgestaltet, d.h. die Schalter 11 und 12 verbleiben in der jeweiligen Position a.

Fällt dagegen das Signal auf der Signalleitung 13 ganz aus oder es verändert sich die Frequenz der Impulsfolge, bewertet die Steuereinheit 14 dieses als nicht korrekt. Infolge dieser Bewertung wird durch die Steuereinheit 14 das Doppelrelais 15 geschaltet und das betrachtete System galvanisch vom CAN-Bus getrennt. Die Schalter 11 und 12 gehen dabei in die Position b über.

Im vorliegenden Fall ist das Geschwindigkeits- und Abstandsregelsystem 3 am Busende angeordnet, wobei bei der Schalterstellung b ein Busabschlußwiderstand 16 zwischen den Busleitungen CAN (H) und CAN (L) geschaltet ist. Mit Hilfe dieses Widerstandes 16 wird ein korrekter Busabschluß gewährleistet. Für andere Anordnungen des abzukoppelnden Steuergerätes 3 genügt es, die Verbindung dieses Steuergerätes mit den Busleitungen CAN (L) und CAN (H) zu kappen.

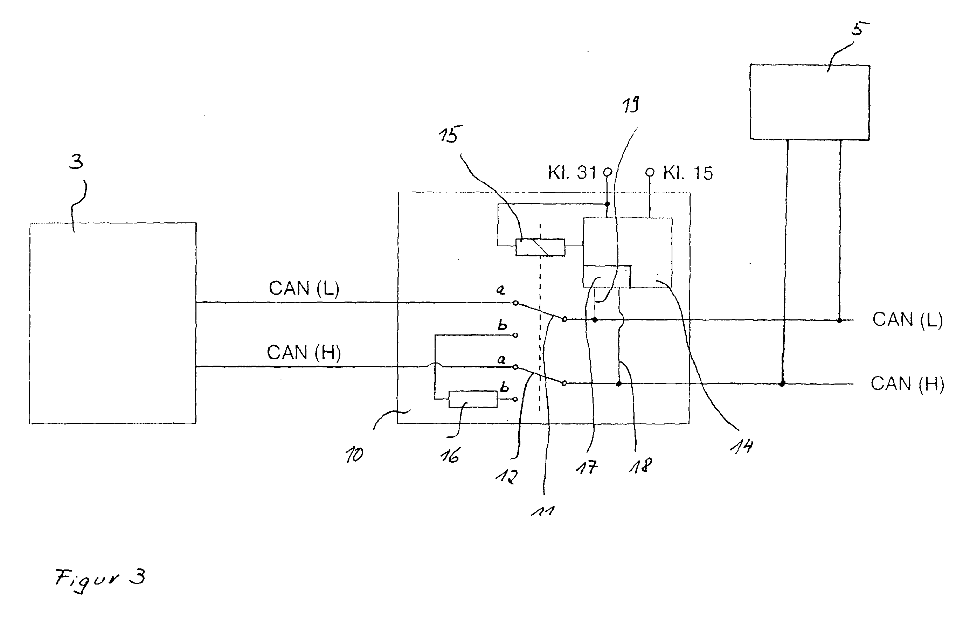

In Figur 3 ist eine indirekte Erkennung des Betriebszustandes des Geschwindigkeits- und Abstandsregelsystem 3 dargestellt. Dabei ist das Geschwindigkeits- und Abstandsregelsystem 3 mit der Steuereinheit 14 des CAN-Bus-Entkopplers 10 lediglich über die Busleitungen CAN (L) und CAN (H) verbunden. Die Steuereinheit 14 des CAN-Bus-Entkopplers 10 weist dabei eine CAN-Busschnittstelle 17 auf, welche über die Leitungen 18 und 19 an die Busleitungen CAN (H) und CAN (L) angekoppelt sind. Eine Erkennung des Betriebszustandes wird hier von der Steuereinheit 14 nur durch die Bewertung des Buszustandes über eine an sich bekannte Busoff-Prüfung durchgeführt, bei welcher Fehler auf dem Bussystem durch Zählung registriert und bei Erreichung eines bestimmten Zählerstandes das Gerät vom Bus abgeschaltet wird.

Beim Erkennen eines solchen Busoff-Zustandes steuert die Steuereinheit 14 das Doppelrelais 15 an, so daß dieses seinerseits das Abstands- und Geschwindigkeitsregelsystem 3 galvanisch vom CAN-Bus CAN (L) und CAN (H) trennt. Wie schon im Zusammenhang mit Figur 2 erläutert, gehen die von dem Relais 15 gesteuerten Schalter 11 und 12 vom Zustand a in den Zustand b über, wodurch das Geschwindigkeits- und Abstandsregelsystem 3 vom CAN-Bus abgetrennt wird. Auch hier ist ein Busabschlußwiderstand 16 zwischen den Leitungen CAN (H) und CAN (L) vorgesehen, um einen ordnungsgemäßen Busabschluß zu realisieren.

Damit ist sichergestellt, daß nach einem Unfall mit Zerstörung des an dem Stoßfänger 2 des Kraftfahrzeuges 1 angeordneten Abstands- und Geschwindigkeitsregelsystems 3 die Kommunikation der übrigen Steuergeräte 5, 7 und 8 über den CAN-Bus 4 aufrechterhalten wird und das Fahrzeug uneingeschränkt fahrtüchtig bleibt.

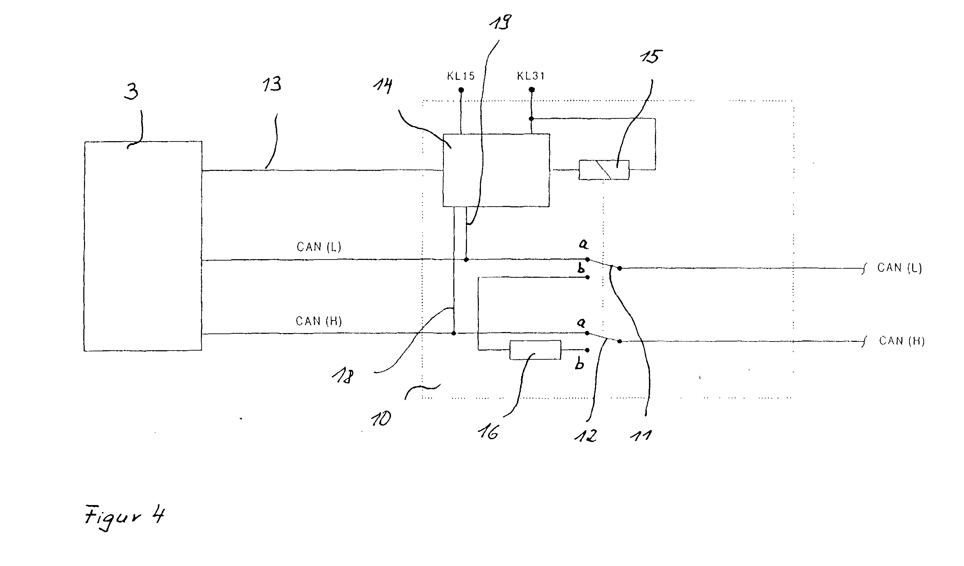

Figur 4 zeigt eine Kombination der Erkennungsmöglichkeiten gemäß Figur 2 und 3. Dabei ist das Abstands- und Regelsystem 3 über eine Signalleitung 13 mit der Steuereinheit 14 des CAN-Bus-Entkopplers 10 verbunden. Darüber hinaus ist die Steuereinheit 14 über Leitungen 18 und 19 an die Busleitungen CAN (H) und CAN (L) angeschlossen. Mit Hilfe dieser Ausgestaltung ist der CAN-Bus-Entkoppler 10 in der Lage, das Erkennen eines nicht korrekten Signals auf der Signalleitung 13 plausibilisieren zu können. Diese Plausibilisierung erfolgt durch die zusätzliche Beobachtung des CAN-Busses 4.

Bei der Plausibilisierung werden die CAN-Botschaften, die von dem abzukoppelnden elektronischen System 3 auf den Bus 4 gelegt sind bzw. deren Ausbleiben bewertet. So wird z. B. festgestellt, ob trotz Zerstörung des Steuergerätes 3 noch Nachrichten auf dem Bus vorhanden sind. Eine galvanische Trennung erfolgt hier erst dann, wenn sowohl das Signal auf der Signalleitung nicht korrekt ist als auch keine Botschaften von dem Geschwindigkeits- und Anstandsregelsystem 3 durch den CAN-Bus-Entkoppler 10 erkannt wird.

Um den Schaltungsaufbau zu vereinfachen ist es möglich, den CAN-Bus-Entkoppler 10 in das Motorsteuergerät 5 baulich zu integrieren. Je nach Anforderung an ein Bussystem ist es auch möglich, Crash-Sensoren 20 anzubinden, um so eine Plausibilisierung durch das elektronische Erkennen des Unfalls als solchen zu ermöglichen.

## Patentansprüche

1. Schaltungsanordnung zur Abkopplung einer elektronischen Einrichtung (3) von einer Datenleitung (CAN(H); CAN(L)) in einem Kraftfahrzeug (1), über welche die elektronische Einrichtung (3) und mindestens ein weiteres elektrisches System (5, 6, 7, 8) Informationen austauschen, wobei die elektronische Einrichtung (3) mit einer Fehlererkennungseinrichtung (10) verbunden ist, welche bei Feststellung eines Fehlers der elektronischen Einrichtung (3) diese galvanisch von der Datenleitung (CAN(H); CAN(L)) abkoppelt, wobei die Betriebsfähigkeit des elektronischen Systems (5, 6, 7, 8) voll aufrechterhalten bleibt, **dadurch gekennzeichnet, dass** die Schaltungsanordnung eine einzige, auf jede Datenleitung (CAN(H); CAN(L)) zugreifende und in dieser angeordnete Schalteinrichtung (11; 12) aufweist, die von der Fehlererkennungseinrichtung (10) bei Erkennung des Fehlers angesteuert wird und die Datenleitungen (CAN(H); CAN(L)) zu der an oder nahe der Außenfläche eines Kraftfahrzeuges angeordneten elektronischen Einrichtung (3) unterbricht.

2. Schaltungsanordnung nach Anspruch 1, **dadurch gekennzeichnet, dass** die Schalteinrichtung (11, 12,) eine Verbindung mit einem Datenleitungsabschlusswiderstand (16) herstellt.

3. Schaltungsanordnung nach Anspruch 1 oder 2, **dadurch gekennzeichnet, dass** die Fehlererkennungseinrichtung (10) die Schalteinrichtung (11, 12) über ein Relais (15) oder einen elektronischen Schalter ansteuert.

4. Schaltungsanordnung nach Anspruch 2 oder 3, **dadurch gekennzeichnet, dass** die elektronische Einrichtung (3) über eine Signalleitung (13) mit der Fehlererkennungseinrichtung (10) verbunden ist.

5. Schaltungsanordnung nach Anspruch 2 oder 3, **dadurch gekennzeichnet, dass** die Fehlererkennungseinrichtung (10) über die Datenleitung (CAN(H); CAN(L)) mit der zu überwachenden elektronischen Einrichtung (3) verbunden ist und in Abhängigkeit der Bewertung des Zustandes der Datenleitung (CAN(H); CAN(L)) die Schalteinrichtung (3) ansteuert.

6. Schaltungsanordnung nach einem der vorhergehenden Ansprüche, **dadurch gekennzeichnet, dass** die Datenleitung (CAN(H); CAN(L)) ein Zweidraht-Bussystem ist, wobei in jeder Busleitung (CAN(H), CAN(L)) ein Schalter (11, 12) angeordnet ist, und die Schalter (11, 12) beider Busleitungen (CAN(H); CAN(L)) gleichzeitig über ein Doppelrelais (15) von der Fehlererkennungseinrichtung (10) gesteuert werden.

7. Schaltungsanordnung nach einem der vorhergehenden Ansprüche, **dadurch gekennzeichnet, dass** die Fehlererkennungseinrichtung (10) Bestandteil des elektronischen Systems (5) ist.

8. Schaltungsanordnung nach Anspruch 1, **dadurch gekennzeichnet, dass** die elektronische Einrichtung (3) ein Steuergerät, insbesondere eine Abstandsregeleinrichtung eines Kraftfahrzeuges ist.

9. Schaltungsanordnung nach Anspruch 1, **dadurch gekennzeichnet, dass** die elektronische Einrichtung (3) eine Sensoreinrichtung des Kraftfahrzeuges ist.

## Claims

1. Circuit arrangement for decoupling an electronic device (3) from a data line (CAN(H); CAN(L)) in a motor vehicle (1), via which line the electronic device (3) and at least one further electrical system (5, 6, 7, 8) exchange information, the electronic device (3) being connected to a fault detection device (10) which, when a fault is detected in the electronic device (3), decouples it galvanically from the data line (CAN(H); CAN(L)), the operational capability of the electronic system (5, 6, 7, 8) being fully maintained, **characterized in that** the circuit arrangement has a single switching device (11; 12) which accesses each data line (CAN(H); CAN(L)), is arranged in the latter, is actuated by the fault detection device (10) when the fault is detected and which interrupts the data lines (CAN(H); CAN(L)) to the electronic device (3) which is arranged at or near to the outer surface of a motor vehicle.

2. Circuit arrangement according to Claim 1, **characterized in that** the switching device (11, 12) forms a connection to a data line terminating resistor (16).

3. Circuit arrangement according to Claim 1 or 2, **characterized in that** the fault detection device (10) actuates the switching device (11, 12) by means of a relay (15) or an electronic switch.

4. Circuit arrangement according to Claim 2 or 3, **characterized in that** the electronic device (3) is connected to the fault detection device (10) via a signal line (13).

5. Circuit arrangement according to Claim 2 or 3, **characterized in that** the fault detection device (10) is connected via the data line (CAN(H); CAN(L)) to the electronic device (3) to be monitored, and actuates the switching device (3) as a function of the evaluation of the state of the data line (CAN(H); CAN(L)).

6. Circuit arrangement according to one of the preceding claims, **characterized in that** the data line (CAN(H); CAN(L)) is a two-wire bus system, a switch (11, 12) being arranged in each bus line (CAN(H), CAN(L)), and the switches (11, 12) of the two bus lines (CAN(H); CAN(L)) being simultaneously controlled by the fault detection device (10) via a double relay (15).

7. Circuit arrangement according to one of the preceding claims, **characterized in that** the fault detection device (10) is a component of the electronic system (5).

8. Circuit arrangement according to Claim 1, **characterized in that** the electronic device (3) is a controller, in particular a distance controlling device of a motor vehicle.

9. Circuit arrangement according to Claim 1, **characterized in that** the electronic device (3) is a sensor device of the motor vehicle.

## Revendications

1. Configuration de circuit pour le découplage d'une installation électronique (3) d'une ligne de données (CAN (H), CAN (L)) dans un véhicule automobile (1), par l'intermédiaire duquel l'installation électronique (3) et au moins un autre système électrique (5, 6, 7, 8) échangent des informations, l'installation électronique (3) étant reliée à une installation de reconnaissance de défectuosité (10) laquelle, lors de la détection d'une défectuosité de l'installation électronique (3) découple celle-ci galvaniquement de la ligne de données (CAN (H), CAN (L)), la capacité de fonctionnement du système électronique (5, 6, 7, 8) demeurant en parfaite état, ce dispositif étant **caractérisé en ce que** la configuration du circuit présente un dispositif unique de commutation (11, 12) accédant à chaque ligne de données (CAN (H), CAN (L)) tout en étant configuré sur ledit dispositif de commutation qui, lors de la reconnaissance de la défectuosité, est commandé par le dispositif de reconnaissance de défectuosité (10) et qui interrompt les lignes de données (CAN (H), CAN (L)) allant vers l'installation électronique (3) disposée sur ou à proximité de la surface extérieure d'un véhicule automobile.

2. Configuration de circuit selon la revendication 1, **caractérisée en ce que** le dispositif de commutation (11, 12) opère une liaison avec une résistance (16) de découplage de la ligne de données.

3. Configuration de circuit selon les revendications 1 ou 2, **caractérisée en ce que** le dispositif de reconnaissance de défectuosité (10) commande le dispositif de commutation (11, 12) via un relais 15 ou un commutateur électronique.

4. Configuration de circuit selon la revendication 2 ou 3, **caractérisée en ce que** le dispositif électronique (3) est relié au dispositif de reconnaissance de défectuosité (10) via une ligne de signal (13).

5. Configuration de circuit selon les revendications 2 ou 3, **caractérisée en ce que** le dispositif de reconnaissance de défectuosité (10) est relié au dispositif électronique de surveillance (3) via la ligne de données (CAN (H), CAN (L)) et commande le dispositif de commutation (3) en fonction de l'analyse de l'état de la ligne de données (CAN (H), CAN (L)).

6. Configuration de circuit selon une des revendications précédentes, **caractérisée en ce que** la ligne de données (CAN (H), CAN (L)) est un système de bus à deux fils, dans chaque ligne de bus (CAN (H), CAN (L)) un commutateur (11, 12) étant disposé et les commutateurs (11, 12) de chacune des deux lignes de bus (CAN (H), CAN (L)) étant commandés en même temps via un double relais (15) du dispositif (10) de reconnaissance de défectuosité.

7. Configuration de circuit selon une des revendications précédentes, **caractérisée en ce que** le dispositif (10) de reconnaissance de défectuosité est un élément constituant du système électronique (5).

8. Configuration de circuit selon la revendication 1, **caractérisée en ce que** le dispositif électronique (3) est un système de commande, en particulier un dispositif de réglage de distance d'un véhicule automobile.

9. Configuration de circuit selon la revendication 1, **caractérisée en ce que** le dispositif électronique (3) est une installation de détection du véhicule automobile.
